# DEMANDE DE BREVET EUROPEEN

(11) **EP 3 489 831 A1**
(43) Date de publication de la demande: **29.05.2019**
(21) Numéro de dépôt: 18208149.7
(22) Date de dépôt: 23.11.2018
(51) Int. Cl.: G06F 11/30

(54) **PROCÉDÉ ET DISPOSITIF DE SURVEILLANCE D'UN PROCESSUS GÉNÉRATEUR DE DONNÉES D'UNE MÉTRIQUE POUR LA PRÉDICTION D'ANOMALIES**

(30) Priorité: 27.11.2017 FR 1761194
(71) Demandeur: Bull SAS, 78340 Les Clayes-sous-Bois (FR)
(72) Inventeur: PLATINI, Marc, 38100 GRENOBLE (FR); BESSE, Adrien, 78000 VERSAILLES (FR); PELLETIER, Benoit, 38960 SAINT ETIENNE DE CROSSEY (FR)
(74) Mandataire: Novagraaf Technologies

(57) **Abrégé**

Un dispositif (DS) surveille un processus impliquant au moins un équipement électronique (EE1-EE4) en fonctionnement, et générateur de premières données d'une métrique. Ce dispositif (DS) comprend :
- des moyens d'apprentissage (MA) configurés pour analyser, de façon automatisée, des secondes données représentatives d'événements survenus pendant ledit processus afin de déterminer des anomalies d'un type choisi, les moyens d'apprentissage (MA) étant configurés pour déterminer de façon automatisée un indicateur représentatif de ladite métrique puis une corrélation entre lesdites anomalies déterminées et ledit indicateur puis au moins une règle définissant ladite corrélation, et
- des moyens de surveillance (MS1) configurés pour analyser, de façon automatisée, périodiquement et groupe après groupe, des premières données nouvellement générées en vérifiant si une valeur dudit indicateur, déterminée à partir de ces dernières, satisfait à ladite règle déterminée, afin de prédire l'occurrence de ladite anomalie dans un futur groupe de premières données lorsque cette valeur satisfait à ladite règle.

## Description

L'invention concerne le domaine de la surveillance de processus impliquant au moins un équipement électronique en fonctionnement, et générateurs de données.

Certains systèmes, comme par exemple les calculateurs à hautes performances (ou HPCs (« High Performance Computers »)), sont impliqués dans des processus qui génèrent des données de métrique(s).

On entend ici par « métrique » une variable pouvant prendre des valeurs alphanumériques prédéfinies. Ces valeurs sont fournies par au moins un équipement électronique, comme par exemple un capteur ou une sonde (éventuellement de température ou de pression), un ordinateur, un processeur (ou CPU (« Central Processing Unit »)), une carte électronique, ou un contrôleur. Par conséquent, une métrique pourra, par exemple, être une température, une bande passante, un nombre d'entrées/sorties utilisées, un temps de réponse, un temps d'exécution, une consommation de ressource, ou un pourcentage de capacité de traitement utilisé, selon le processus considéré.

Comme le sait l'homme de l'art, pendant un processus générateur de données de métrique(s) peuvent survenir des événements, et notamment des anomalies, comme par exemple une surchauffe, un temps de réponse de plus en plus long ou un pourcentage de capacité de traitement utilisé de plus en plus élevé d'un ordinateur ou d'une carte électronique. Certaines de ces anomalies peuvent être suivies par une panne ou une indisponibilité temporaire d'au moins un équipement électronique concerné qui peut s'avérer dommageable pour des usagers. C'est par exemple le cas lorsqu'une partie des ressources informatiques offertes par un ordinateur ou un calculateur à hautes performances n'est plus disponible et donc ne permet plus de réaliser de gros calculs et/ou traitements de données numériques et/ou contrôles d'équipements électroniques.

Dans de nombreux cas, prédire l'occurrence prochaine d'une anomalie peut permettre de prendre des mesures de nature à éviter une panne ou une indisponibilité temporaire d'au moins un équipement électronique. Or, plus le nombre de données de métrique générées par un processus est élevé, plus il devient difficile de prévoir l'occurrence prochaine d'une anomalie, en particulier pour une personne.

Actuellement, les méthodes de surveillance de processus ne font qu'analyser les données qui sont représentatives des événements (ou « logs ») survenant pendant un processus. Lorsqu'au moins un événement représentatif d'une anomalie d'un type choisi est détecté, une alerte est générée afin qu'une éventuelle mesure soit prise. Un inconvénient principal de ce type de méthode de surveillance de processus réside dans le fait que l'alerte n'est générée qu'une fois l'anomalie survenue et détectée, et donc lorsqu'il est souvent trop tard pour prendre une mesure réellement efficace. De plus, les méthodes de surveillance de processus connues sont presque toujours spécifiques au processus étudié et/ou au système impliqué dans ce processus, si bien qu'elles ne sont pas généralisables.

L'invention a notamment pour but d'améliorer la situation.

La présente description concerne ainsi un procédé de surveillance d'un processus impliquant au moins un équipement électronique en fonctionnement, et générateur de premières données d'une métrique. Le procédé comprend une étape d'apprentissage comprenant une analyse, effectuée de façon automatisée, de secondes données représentatives d'événements survenus pendant ledit processus afin de déterminer des anomalies d'un type choisi, puis une détermination, effectuée de façon automatisée, d'un indicateur représentatif de ladite métrique puis d'une corrélation entre lesdites anomalies déterminées et ledit indicateur puis au moins une règle définissant ladite corrélation. Le procédé comprend une étape de surveillance comprenant une analyse, effectuée de façon automatisée, périodiquement et groupe après groupe, de premières données nouvellement générées en vérifiant si au moins une valeur dudit indicateur, déterminée à partir de ces dernières, satisfait à ladite règle déterminée, afin de prédire l'occurrence de ladite anomalie dans un futur groupe de premières données lorsque ladite au moins une valeur satisfait à ladite règle.

Ainsi, on peut désormais véritablement prédire l'occurrence d'une anomalie avant qu'elle ne survienne, ce qui permet notamment de prendre des mesures efficaces par anticipation.

Le procédé de surveillance selon l'invention peut comporter d'autres caractéristiques qui peuvent être prises séparément ou en combinaison, et notamment :
- dans l'étape d'apprentissage on peut déterminer de façon automatisée l'indicateur parmi plusieurs indicateurs statistiques ;
   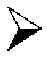 dans l'étape d'apprentissage on peut déterminer parmi les indicateurs statistiques celui qui qui représente le mieux une évolution temporelle caractéristique d'un changement de comportement de la métrique ;
- dans l'étape d'apprentissage la métrique peut être choisie dans un groupe comprenant une température, une bande passante, un nombre d'entrées/sorties utilisées, un temps de réponse, un temps d'exécution, une consommation de ressource, et un pourcentage de capacité de traitement utilisé ;
- dans l'étape d'apprentissage on peut déterminer la règle à partir de modèles prédéfinis qui sont alimentés avec les premières données ;
   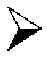 dans l'étape d'apprentissage on peut déterminer une règle qui présente le pourcentage de corrélation le plus élevé avec l'anomalie parmi des règles qui résultent respectivement des modèles prédéfinis alimentés avec les premières données ;
   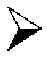 les modèles prédéfinis peuvent être choisis dans un groupe comprenant des forêts d'arbres décisionnels (ou « random forests »), des régressions linéaires et des réseaux de neurones ;
- dans la seconde étape on peut regrouper dans chaque groupe les N dernières premières données générées, avec N ≥ 2, dans des fenêtres glissantes, et on peut analyser les N premières données du dernier groupe constitué en fonction de la règle déterminée afin de prédire l'occurrence de l'anomalie dans le prochain groupe de premières données lorsque les premières données du dernier groupe suivent cette règle.

La présente description concerne ainsi également un produit programme d'ordinateur comprenant un jeu d'instructions qui, lorsqu'il est exécuté par des moyens de traitement, est propre à mettre en oeuvre un procédé de surveillance du type de celui présenté ci-avant pour surveiller un processus impliquant au moins un équipement électronique en fonctionnement, et générateur de premières données d'une métrique.

La présente description concerne en outre un dispositif de surveillance d'un processus impliquant au moins un équipement électronique en fonctionnement, et générateur de premières données d'une métrique. Le dispositif comprend des moyens d'apprentissage configurés pour analyser, de façon automatisée, des secondes données représentatives d'événements survenus pendant ledit processus afin de déterminer des anomalies d'un type choisi, les moyens d'apprentissage étant configurés pour déterminer de façon automatisée un indicateur représentatif de ladite métrique puis une corrélation entre lesdites anomalies déterminées et ledit indicateur puis au moins une règle définissant ladite corrélation. Le dispositif comprend des moyens de surveillance configurés pour analyser, de façon automatisée, périodiquement et groupe après groupe, des premières données nouvellement générées en vérifiant si au moins une valeur dudit indicateur, déterminée à partir de ces dernières, satisfait à ladite règle déterminée, afin de prédire l'occurrence de ladite anomalie dans un futur groupe de premières données lorsque ladite au moins une valeur satisfait à ladite règle.

L'invention propose également un système comprenant au moins un équipement électronique impliqué dans un processus générateur de premières données d'une métrique, et un dispositif de surveillance du type de celui présenté ci-avant.

Un tel système peut, par exemple, constituer un calculateur à hautes performances (ou HPC).

D'autres caractéristiques et avantages de l'invention apparaîtront à l'examen de la description détaillée ci-après, et des dessins annexés, sur lesquels :
- la figure 1 illustre de façon schématique et fonctionnelle un équipement de réseau équipé d'un exemple de réalisation d'un dispositif de surveillance selon l'invention et couplé à un réseau de communication auquel sont également couplés des ordinateurs faisant partie d'un calculateur à hautes performances,
- la figure 2 illustre un exemple d'algorithme mettant en oeuvre un procédé de surveillance de processus selon l'invention, et
- la figure 3 illustre au sein d'un diagramme l'évolution temporelle de trois indicateurs différents mais représentatifs d'une même métrique.

L'invention a notamment pour but de proposer un procédé de surveillance, et un dispositif de surveillance DS associé, destinés à permettre la surveillance d'un processus qui implique au moins un équipement électronique EEj en fonctionnement et qui génère des premières données d'une métrique.

Dans ce qui suit, on considère, à titre d'exemple non limitatif, que le processus générateur de données implique un système S constituant un calculateur à hautes performances (ou HPC). Mais l'invention n'est pas limitée à ce type de système. Elle concerne en effet tout système comportant au moins un équipement électronique impliqué dans un processus générateur de données de métrique(s). Ainsi, elle concerne également les plateformes de calcul distribué en agrégat (ou « cluster ») au sens large, les plateformes en charge de traitements massifs et/ou répétitifs, les ordinateurs (éventuellement portables), les équipements de communication, les installations (éventuellement industrielles), et les bâtiments. D'une manière générale, l'invention concerne tous les systèmes évoluant au cours du temps.

Par ailleurs, on considère dans ce qui suit, à titre d'exemple non limitatif, que le calculateur à hautes performances S est constitué de plusieurs ordinateurs EEj interconnectés via au moins un réseau de communication RC (éventuellement privé). On notera qu'en variante le calculateur à hautes performances S pourrait faire partie d'un nuage informatique (ou « cloud ») ou de l'Internet.

De plus, on considère dans ce qui suit, à titre d'exemple non limitatif, que la métrique est une température. Elle est donc définie par des premières données fournies par des capteurs de température équipant les équipements électroniques EEj. Par exemple, lorsque l'on surveille la température d'un processeur Intel, on utilise une métrique appelée DTS (« Digital Thermal Sensor ») qui représente plus précisément la distance entre la température en cours du processeur (ou CPU) et la valeur maximale de cette température (elle est donc négative ou nulle). Mais l'invention n'est pas limitée à ce type de métrique. Elle concerne en effet toute métrique dont les valeurs sont générées pendant un processus. Ainsi, elle concerne également une bande passante, un nombre d'entrées/sorties utilisées, un temps de réponse, un temps d'exécution, une consommation de ressource, et un pourcentage de capacité de traitement utilisé, par exemple.

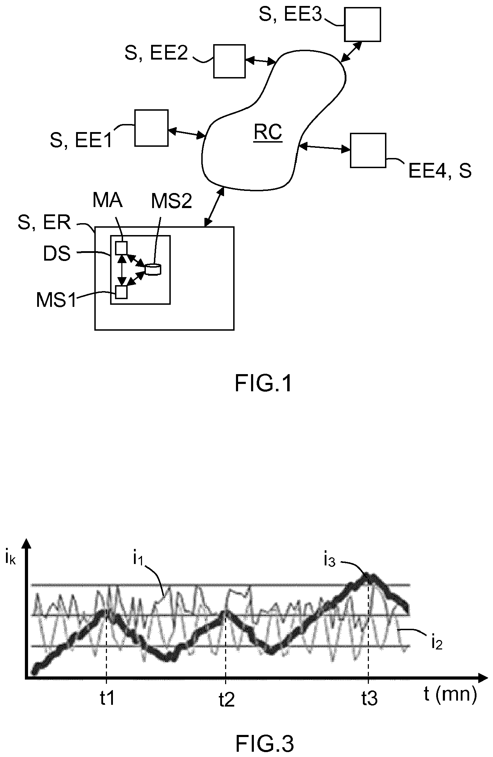

On a schématiquement et fonctionnellement illustré sur la figure 1 un réseau de communication RC auquel sont couplés un équipement de réseau ER équipé d'un exemple de réalisation non limitatif d'un dispositif de surveillance DS selon l'invention, et des équipements électroniques EEj faisant partie d'un système S constituant, ici, un calculateur à hautes performances S.

Dans l'exemple illustré non limitativement, le nombre d'équipements électroniques EEj (ici des ordinateurs) est égal à quatre (j = 1 à 4). Mais ce nombre peut prendre n'importe quelle valeur supérieure ou égale à un (1).

Comme évoqué précédemment, l'invention propose un procédé destiné à surveiller un processus impliquant une partie au moins du système S (et plus précisément au moins un équipement électronique EEj de ce dernier (S)).

Un procédé de surveillance, selon l'invention, comprend des première et seconde étapes qui peuvent être mises en oeuvre au moyen d'un dispositif de surveillance DS comprenant au moins des moyens d'apprentissage MA et des moyens de surveillance MS1.

Comme illustré non limitativement sur la figure 1, ce dispositif de surveillance DS peut, par exemple, être intégralement installé dans un équipement de réseau ER couplé au système S, et faisant éventuellement partie de ce dernier (S) comme illustré non limitativement sur la figure 1. Un tel équipement de réseau ER peut, par exemple, être dédié à la supervision du système S. Mais le dispositif de surveillance DS pourrait être réparti dans plusieurs (au moins deux) équipements électroniques, éventuellement dédiés. Ainsi, ses moyens d'apprentissage MA pourraient, par exemple, faire partie d'un équipement de réseau, et ses moyens de surveillance MS1 pourraient, par exemple, être implantés dans les différents équipements électroniques EEj du système S. Par conséquent, un dispositif de surveillance DS, selon l'invention, peut être réalisé soit sous la forme de modules logiciels (ou informatiques (ou encore « software »)) ; on est alors en présence d'un produit programme d'ordinateur comprenant un jeu d'instructions qui, lorsqu'il est exécuté par des moyens de traitement de type circuits électroniques (ou « hardware »), est propre à mettre en oeuvre le procédé de surveillance, soit sous la forme d'une combinaison de modules logiciels et de circuits électroniques.

Dans une première étape, dite étape d'apprentissage ou phase d'apprentissage, du procédé selon l'invention, on (les moyens d'apprentissage MA du dispositif (de surveillance) DS) commence(nt) par analyser de façon automatisée des secondes données qui sont représentatives d'événements (ou logs) survenus pendant le processus concerné, afin de déterminer des anomalies d'un type choisi. Dans cette première étape, l'analyse peut être effectuée en fonction d'au moins un mot clé. Un tel mot clé peut servir à identifier des anomalies dans les secondes données. N'importe quelle séquence alphanumérique peut être utilisée comme mot clé pour cette analyse. Des mots clés codés numériquement sont par exemple utilisables.

Par exemple, lorsque la métrique est une température relevée dans un équipement électronique EEj, les anomalies recherchées peuvent être des signalements de surchauffe dans cet équipement électronique EEj à certains instants. Dans ce cas, le mot clé recherché dans les secondes données d'événements analysées peut être surchauffe (ou « overheating » en anglais).

Les secondes données qui sont analysées ont été préalablement acquises pendant que le processus se déroulait dans le système S. Ces secondes données sont générées par les équipements électroniques EEj du système S qui font l'objet d'une surveillance ou par un autre équipement électronique dédié à la surveillance de ces derniers (EEj). Par exemple, dans le cas de la métrique DTS les événements (ou logs ou encore secondes données) sont générés par un module de température qui est généralement intégré au processeur ou (CPU). Mais dans le cas d'un circuit de refroidissement d'ordinateur ou CPUs les événements (ou logs ou encore secondes données) sont générés par une sonde externe. On notera que les secondes données sont stockées en correspondance des instants où elles ont été respectivement générées, par exemple dans des moyens de stockage MS2 qui font éventuellement partie du dispositif de surveillance DS, comme illustré non limitativement.

On notera également que des premières données, de la métrique concernée par le processus (ici une température), ont aussi été préalablement acquises pendant que le processus se déroulait dans le système S. Ces premières données sont générées par les équipements électroniques EEj du système S qui font l'objet d'une surveillance ou par d'autres équipements électroniques dédiés à la surveillance de ces derniers (EEj), comme par exemple des capteurs de température. On notera que ces premières données sont stockées en correspondance des instants où elles ont été respectivement générées, par exemple dans les moyens de stockage MS2.

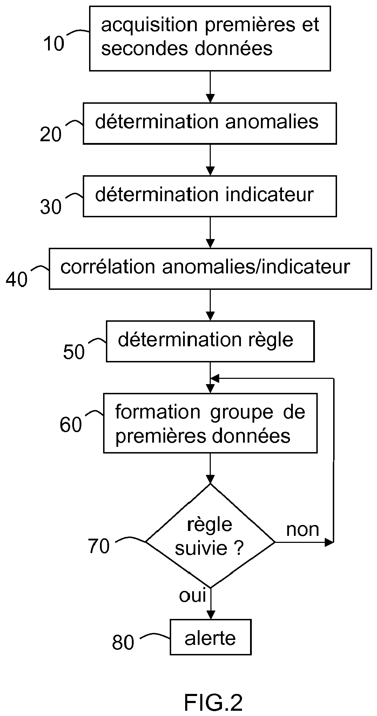

L'acquisition des premières et secondes données correspond à la sous-étape 10 de l'exemple d'algorithme de la figure 2, qui met en oeuvre un procédé de surveillance de processus selon l'invention. La détermination des anomalies d'un type choisi correspond à la sous-étape 20 de l'exemple d'algorithme de la figure 2.

La première étape, du procédé selon l'invention, se poursuit par la détermination (par les moyens d'apprentissage MA), de façon automatisée, d'un indicateur iₖ qui est représentatif de la métrique concernée (ici une température).

Cette détermination d'indicateur iₖ correspond à la sous-étape 30 de l'exemple d'algorithme de la figure 2.

Par exemple, dans la première étape on (les moyens d'apprentissage MA) peu(ven)t déterminer de façon automatisée l'indicateur iₖ parmi plusieurs indicateurs statistiques. Ces derniers sont bien adaptés au cas où le nombre de premières données de la métrique est très important, car ils peuvent fournir une indication représentative d'un nombre important de premières données appartenant à un même intervalle de temps et ainsi permettre une réduction de la complexité des données en entrée.

De nombreux indicateurs statistiques peuvent être utilisés, et notamment une valeur moyenne, un écart type ou un histogramme. Ce dernier est particulièrement intéressant lorsque le nombre de premières données de la métrique est très important.

Ainsi, si l'on dispose d'une première donnée de la métrique à chaque minute, on peut, par exemple, définir un histogramme des premières données par intervalles de temps de cinq minutes. Dans ce cas, chaque intervalle de temps est associé à cinq premières données successives. Par exemple, si l'on a dans un intervalle de temps de cinq minutes les cinq premières données [1,35,20,2,3] (en valeur absolue), on peut construire l'histogramme suivant: dans l'intervalle de valeurs [1-10[ on a trois premières données [1,2,3], dans l'intervalle de valeurs [10-20[ on a aucune première donnée, dans l'intervalle de valeurs [20-30[ on a une première donnée [20], dans l'intervalle de valeurs [30-40[ on a une première donnée [35], et dans l'intervalle de valeurs [0-+∞[ on a aucune première donnée. Le nombre de premières données de chaque intervalle de valeurs est ensuite normalisé par rapport au nombre totale de valeurs (ici égal à cinq) afin d'obtenir le pourcentage de premières données par intervalle de valeurs. On aura donc le pourcentage de 60% (ou 0,6) associé à l'intervalle de valeurs [1-10[, le pourcentage de 0% (ou 0) associé à l'intervalle de valeurs [10-20[, le pourcentage de 20% (ou 0,2) associé à l'intervalle de valeurs [20-30[, le pourcentage de 20% (ou 0,2) associé à l'intervalle de valeurs [30-40[, et le pourcentage de 0% (ou 0) associé à l'intervalle de valeurs [0-+∞[. L'indicateur iₖ est donc ici constitué des pourcentages associés respectivement aux quatre différents intervalles de valeurs possibles pour la métrique, pour l'intervalle de temps de cinq minutes considéré.

On notera que la taille de chaque intervalle de temps et la taille de chaque intervalle de valeurs peuvent varier afin de s'adapter à chaque type de premières données de métrique, aux fréquences respectives d'acquisition des premières et secondes données et au nombre d'équipements électroniques EEj surveillés. L'objectif est en effet de pouvoir ajuster dynamiquement les intervalles de l'histogramme en fonction des premières données en entrée.

A titre d'exemple, dans la première étape on (les moyens d'apprentissage MA) peu(ven)t, par exemple, déterminer parmi les indicateurs statistiques celui qui représente le mieux une évolution temporelle caractéristique d'un changement de comportement de la métrique. Pour ce faire, plusieurs indicateurs statistiques sont déterminés par les moyens d'apprentissage MA à partir du même ensemble de premières données stockées, et les moyens d'apprentissage MA retiennent celui qui représente le mieux une évolution temporelle caractéristique du changement de comportement de la métrique.

On a schématiquement illustré dans le diagramme de la figure 3 les évolutions temporelles respectives de trois indicateurs iₖ (k = 1 à 3) différents mais représentatifs d'une même métrique. Comme on peut le constater, la courbe de l'indicateur i₃ est tout particulièrement représentative d'une évolution temporelle caractéristique d'un changement de comportement de la métrique, alors que l'on ne peut tirer aucun enseignement direct, relatif à cette métrique, des courbes des deux autres indicateurs i₁ et i₂. Dans une telle situation c'est donc l'indicateur i₃ qui sera choisi par les moyens d'apprentissage MA pour caractériser les changements de comportement de la métrique.

La première étape, du procédé selon l'invention, se poursuit par la détermination (par les moyens d'apprentissage MA), de façon automatisée, d'une corrélation entre les anomalies qui ont été déterminées dans les secondes données stockées et l'indicateur iₖ qui vient d'être déterminé à partir des premières données stockées.

Dans un ou plusieurs modes de réalisation, la détermination d'une corrélation entre les anomalies et l'indicateur comprend la détermination d'une corrélation entre l'occurrence d'une ou des anomalies et l'évolution de l'indicateur. Cette corrélation peut être une corrélation temporelle entre l'occurrence d'une ou des anomalies et un ou des événements dans l'évolution de l'indicateur. Un événement correspond par exemple à un changement dans l'évolution de l'indicateur ou une propriété particulière à un instant donné de l'évolution de l'indicateur. Cet événement peut par exemple être un passage d'une croissance à une décroissance de l'indicateur ou vice versa, un passage par un maximum ou minimum local, un passage par une valeur de seuil, une décroissance / croissance supérieure à un seuil, etc. Cet événement peut être détecté ou prédit par une analyse dans le domaine temporel et/ou fréquentiel de l'évolution de l'indicateur.

Toute technique de détermination de corrélation, connue de l'homme de l'art, peut être ici utilisée. Ainsi, on pourra, par exemple, déterminer si chaque anomalie à un instant t donné est temporellement corrélée à un passage d'une croissance à une décroissance de l'indicateur iₖ déterminé ou inversement à un passage d'une décroissance à une croissance de l'indicateur iₖ déterminé. C'est notamment le cas dans l'exemple non limitatif qui est illustré sur la figure 3. En effet, il existe une corrélation entre chaque passage d'une croissance à une décroissance de l'indicateur i₃ survenant aux instants t1, t2 et t3 et des anomalies survenues juste après ces instants t1, t2 et t3. Mais d'autres corrélations peuvent être déterminées. Ainsi, on peut, par exemple, déterminer si chaque anomalie à un instant t donné est temporellement corrélée à un maximum local ou minimum local de l'indicateur iₖ déterminé, ou à une variation particulière d'une moyenne, ou à un écart type supérieur à un seuil, ou encore à une distance seuil entre anomalies (technique dite DTW (ou « Dynamic Time Warping »)).

La détermination de corrélation correspond à la sous-étape 40 de l'exemple d'algorithme de la figure 2.

La première étape (étape d'apprentissage), du procédé selon l'invention, se termine par la détermination (par les moyens d'apprentissage MA), de façon automatisée, d'au moins une règle définissant la corrélation venant d'être déterminée.

Cette détermination de règle(s) correspond à la sous-étape 50 de l'exemple d'algorithme de la figure 2.

Dans un ou plusieurs examples de réalisation, une règle est une règle destinée à être appliquée à un indicateur pour déterminer si, à un moment ou un autre de son évolution, l'indicateur satisfait la règle. La règle peut être appliquée par exemple pour déterminer si une ou plusieurs valeurs de l'indicateur vérifient une ou des conditions prédéfinies. La règle peut être appliquée à l'indicateur pour déterminer, dans l'évolution de l'indicateur, l'occurrence d'au moins un événement correspondant à l'occurrence d'au moins une anomalie parmi des anomalies pour lesquelles une corrélation a été détectée avec cet indicateur. La règle peut être appliquée sur un intervalle de temps donné de l'évolution de l'indicateur (par exemple sur un groupe des premières données) ou à un instant donné de son évolution temporelle (par exemple une valeur de la métrique à un instant donné) ou sur un ensemble de valeurs de l'indicateur. Ainsi, comme expliqué plus en détail plus loin, il est ensuite possible, par application de la règle et donc analyse uniquement de l'évolution de l'indicateur, de prédire l'occurrence d'une anomalie.

Par exemple, dans la première étape on (les moyens d'apprentissage MA) peu(ven)t déterminer la/chaque règle à partir de modèles prédéfinis qui sont alimentés avec les premières données stockées.

Ces modèles sont par exemple des modèles d'analyse de l'évolution d'un indicateur, par exemple pour l'analyse dans le domaine temporel et/ou fréquentiel de l'évolution d'un indicateur de sorte à extraire des caractéristiques temporelles et/ou fréquentielles de l'évolution d'un indicateur.

Ces modèles prédéfinis peuvent, par exemple, être stockés dans les moyens d'apprentissage MA ou bien dans les moyens de stockage MS2.

Par ailleurs, ces modèles prédéfinis peuvent, par exemple et non limitativement, être choisis dans un groupe comprenant des forêts d'arbres décisionnels (ou « random forests »), des régressions linéaires et des réseaux de neurones. Par exemple, dans le cas de forêts d'arbres décisionnels, on construit des arbres avec des branches et des feuilles à partir des premières données stockées. Les branches représentent les liens entre les règles et les feuilles représentent des règles. La construction de ce type d'arbre décisionnel étant bien connue de l'homme de l'art, elle ne sera donc pas décrite ci-après. On précisera simplement que l'on construit plusieurs arbres à partir d'un même ensemble de premières données afin de les mettre en « concurrence ». En effet, les règles établies par un arbre sont basées sur des méthodes probabilistes et non déterministes, et par conséquent plusieurs arbres (une forêt) ne produiront pas, a priori, les mêmes règles. On pourra donc ensuite sélectionner le/les meilleur(s) arbre(s) de la forêt, par exemple.

A titre d'exemple, dans la première étape on (les moyens d'apprentissage MA) peu(ven)t déterminer la/chaque règle qui présente le pourcentage de corrélation le plus élevé avec les anomalies détectées parmi des règles résultant respectivement des modèles prédéfinis alimentés avec les premières données.

Par exemple, une règle est utilisée pour détecter des événements prédéfinis dans l'évolution d'un indicateur et une mesure de corrélation (par exemple, un pourcentage de corrélation, un taux de corrélation) entre des événements détectés et l'occurrence d'une ou plusieurs anomalies d'un type donné est déterminée. Cette mesure de corrélation peut être effectuée sur un intervalle de temps donné de l'évolution de l'indicateur ou à un instant donné de son évolution temporelle ou sur un ensemble de valeurs de l'indicateur.

A titre d'exemple illustratif, une règle adaptée à l'évolution de l'indicateur i₃ illustré sur la figure 3 peut être « est-on arrivé à la fin d'une phase de croissance de l'indicateur i₃ ? ». De manière plus formelle, cette règle peut s'écrire x(t+1) < x(t), de préférence en prenant plusieurs valeurs pour se soustraire du bruit. Dans ce dernier cas, on peut avoir une règle telle que x(t+1) < x(t) ET x(t+2) < x(t) ET x(t+1) < x(t-1) ET x(t+1) < x(t-2).

Une fois la/chaque règle déterminée, la phase d'apprentissage du dispositif de surveillance DS est terminée pour la métrique considérée et le système S considéré. La seconde étape, dite de surveillance, du procédé selon l'invention, peut alors commencer.

Dans cette seconde étape (dite étape de surveillance ou phase de surveillance), on (les moyens de surveillance MS1 du dispositif de surveillance DS) regroupe(nt) les premières données nouvellement et successivement générées au sein de groupes. Ces groupes sont analysés par les moyens de surveillance MS1 les uns après les autres au fur et à mesure de leur création (c'est-à-dire à la volée), de façon automatisée et périodiquement. Pour ce faire, les moyens de surveillance MS1 vérifient si la valeur de l'indicateur iₖ, déterminée à partir des premières données du groupe analysé, satisfait à la/chaque règle déterminée. On détermine par exemple l'occurrence d'un événement particulier dans l'évolution de l'indicateur. Si cette valeur d'indicateur satisfait à cette règle, les moyens de surveillance MS1 prédisent l'occurrence d'une anomalie du type choisi dans un futur groupe de premières données (pas encore générées).

Pour effectuer cette vérification les moyens de surveillance MS1 peuvent préalablement déterminer la valeur prise par l'indicateur iₖ, avec les premières données du groupe analysé.

Cette seconde étape correspond aux sous-étapes 60 à 80 de l'exemple d'algorithme de la figure 2. Plus précisément, dans cet algorithme un groupe de premières données est constitué dans la sous-étape 60, puis on vérifie dans le test de la sous-étape 70 si ce groupe satisfait à la/chaque règle déterminée (via la valeur associée de l'indicateur iₖ). Si le résultat du test est négatif (et donc si le groupe ne satisfait pas à la/chaque règle (via la valeur associée de l'indicateur iₖ)), alors les moyens de surveillance MS1 retournent effectuer la sous-étape 60 pour constituer un nouveau groupe de premières données à analyser. En revanche, si le résultat du test est positif (et donc si le groupe satisfait à la/chaque règle (via la valeur associée de l'indicateur iₖ)), alors les moyens de surveillance MS1 peuvent, par exemple, déclencher la génération d'une alarme dans une sous-étape 80.

Cette alarme peut être un message textuel ou sonore à destination du gestionnaire de l'équipement de réseau ER et/ou de chaque gestionnaire d'un équipement électronique EEj pour lequel une future anomalie a été prédite.

On comprendra que l'alarme a pour but de déclencher la prise de mesure(s) efficace(s) par anticipation. On pourrait d'ailleurs envisager que le dispositif de surveillance DS soit agencé de manière à proposer des mesures (ou actions) à entreprendre pour éviter l'occurrence de l'anomalie prédite. Ainsi, on peut avoir comme mesure (ou action) préventive l'augmentation de la puissance du refroidissement du processeur qui fait l'objet de la prédiction d'anomalie, ou bien le déplacement d'une partie au moins d'un calcul sur un processeur qui ne fait pas l'objet de la prédiction d'anomalie et donc qui est « froid ».

On notera qu'afin de suivre en temps réel l'évolution des premières données, il est avantageux de fonctionner selon un mode dit de fenêtres glissantes. A cet effet, chaque nouveau groupe (m) de N premières données constitué peut comprendre les (N-1) plus récentes premières données du groupe précédant (m-1) plus la toute dernière première donnée générée par le processus. Par exemple, si N = 5, le nouveau groupe (m) de 5 premières données constitué comprend les 4 plus récentes premières données du groupe précédant (m-1) plus la toute dernière première donnée générée par le processus. On peut ainsi effectuer une surveillance continue et en temps réel des premières données générées, qui optimise la réactivité.

On notera que la surveillance en temps réel des équipements électroniques EEj via les premières données associées (produites par le processus considéré) peut être réalisée de façon centralisée ou distribuée. Dans le cas centralisé les moyens de surveillance MS1 sont installés dans un unique équipement, ici l'équipement de réseau ER. Dans le cas distribué les moyens de surveillance MS1 sont installés dans plusieurs équipements, comme par exemple dans chaque équipement électronique EEj surveillé ou dans des équipements de réseau « intermédiaires » surveillant chacun un ou plusieurs équipements électroniques EEj.

Grâce à l'invention, il est désormais possible de prédire efficacement et suffisamment tôt l'occurrence d'anomalies dans un système.

Il est à noter que les fonctions et étapes décrites dans ce document peuvent être mises en oeuvre dans un logiciel (par exemple, par la mise en oeuvre d'un logiciel sur un ou plusieurs processeurs, pour exécution sur un ordinateur à usage général (par exemple, par l'exécution par un ou plusieurs processeurs) afin d'implémenter un ordinateur à usage spécifique ou similaire) et/ou peuvent être mises en oeuvre par du hardware (par exemple, utilisant un ordinateur à usage général, un ou plusieurs circuits intégrés (ASIC) et/ou tout autre équipement équivalent).

Un aspect est un support de stockage lisible par ordinateur sur lequel est stocké un ensemble d'instructions, l'ensemble d'instructions étant configuré pour, lorsqu'il est chargé par un ordinateur, un processeur ou un composant matériel programmable, amener l'ordinateur, le processeur, le composant matériel programmable ou plus généralement un dispositif hôte à mettre en oeuvre l'un des procédés décrits dans ce document. Dans certains cas, le support de stockage lisible par ordinateur n'est pas transitoire.

Les supports de stockage lisibles par ordinateur peuvent être, par exemple, des mémoires numériques, des supports de stockage magnétiques tels que des disques magnétiques et des bandes magnétiques, des disques durs ou des supports de stockage de données numériques à lecture optique. Les réalisations couvrent également les ordinateurs programmés pour exécuter lesdites étapes des méthodes décrites ici ou les réseaux logiques programmables (de terrain) ((F)PLAs) ou les réseaux de portes programmables (de terrain) ((F)PGAs), programmés pour exécuter lesdites étapes des méthodes décrites ci-dessus.

De plus, les schémas fonctionnels représentent des vues conceptuelles des circuits illustratifs qui incarnent les principes de l'invention. De même, il sera apprécié que tout organigramme, diagramme de flux, diagramme de transition d'état, pseudo-code, etc. représente divers processus qui peuvent être représentés de manière substantielle sur un support lisible par ordinateur et exécutés par un ordinateur ou un processeur, que cet ordinateur ou processeur soit ou non explicitement indiqué.

Dans le présent document, les blocs fonctionnels désignés comme étant des moyens configurés pour exécuter une certaine fonction s'entendent comme des blocs fonctionnels comprenant des composants matériels ou circuits qui sont adaptés pour exécuter ou configurés pour exécuter une certaine fonction. De plus, toute entité décrite ici comme "moyen", peut correspondre ou être mise en oeuvre comme "un ou plusieurs modules", "un ou plusieurs dispositifs", "une ou plusieurs unités", etc. Lorsqu'elles sont fournies par un processeur, les fonctions peuvent être fournies par un seul processeur dédié, par un seul processeur partagé ou par plusieurs processeurs individuels, dont certains peuvent être partagés. En outre, l'utilisation explicite des termes "processeur" ou "contrôleur" ne doit pas être interprétée comme se référant exclusivement au matériel capable d'exécuter des logiciels, et peut implicitement inclure, sans limitation, un processeur de signaux numériques (DSP), un processeur réseau, des circuits intégrés spécifiques à une application (ASIC), des réseaux à portes programmables (FPGA), la mémoire morte (ROM) pour stocker le logiciel, la mémoire vive (RAM) et le stockage non-volatile. D'autres matériels, conventionnels ou sur mesure, peuvent également être inclus. Leur fonction peut être assurée par le fonctionnement de la logique du programme, par la logique dédiée, par l'interaction de la commande du programme et de la logique dédiée, ou même manuellement, la technique particulière pouvant être choisie par l'exécutant tel que plus spécifiquement compris dans le contexte.

L'invention ne se limite pas aux modes de réalisation de procédé de surveillance, de dispositif de surveillance, et de système décrits ci-avant, seulement à titre d'exemple, mais elle englobe toutes les variantes que pourra envisager l'homme de l'art dans le seul cadre des revendications ci-après.

## Revendications

1. Procédé de surveillance d'un processus impliquant au moins un équipement électronique (EEj) en fonctionnement, et générateur de premières données d'une métrique, le procédé comprenant
i) une étape d'apprentissage (10-50) comprenant
une analyse, effectuée de façon automatisée, de secondes données représentatives d'événements survenus pendant ledit processus afin de déterminer des anomalies d'un type choisi, puis
une détermination, effectuée de façon automatisée, d'un indicateur représentatif de ladite métrique puis d'une corrélation entre lesdites anomalies déterminées et ledit indicateur puis au moins une règle définissant ladite corrélation, et
ii) une étape de surveillance (60-80) comprenant
une analyse, effectuée de façon automatisée, périodiquement et groupe après groupe, de premières données nouvellement générées en vérifiant si au moins une valeur dudit indicateur, déterminée à partir de ces dernières, satisfait à ladite règle déterminée, afin de prédire l'occurrence de ladite anomalie dans un futur groupe de premières données lorsque ladite au moins une valeur satisfait à ladite règle.

2. Procédé selon la revendication 1, dans lequel ladite étape d'apprentissage (10-50) comprend une détermination, effectuée de façon automatisée, dudit indicateur parmi plusieurs indicateurs statistiques.

3. Procédé selon la revendication 2, dans lequel ladite étape d'apprentissage (10-50) comprend une détermination, parmi lesdits indicateurs statistiques, d'un indicateur statistique celui représente le mieux une évolution temporelle caractéristique d'un changement de comportement de ladite métrique.

4. Procédé selon l'une des revendications 1 à 3, dans lequel, dans ladite étape d'apprentissage (10-50) ladite métrique est choisie dans un groupe comprenant une température, une bande passante, un nombre d'entrées/sorties utilisées, un temps de réponse, un temps d'exécution, une consommation de ressource, et un pourcentage de capacité de traitement utilisé.

5. Procédé selon l'une des revendications 1 à 4, dans lequel ladite étape d'apprentissage (10-50) comprend une détermination de ladite règle à partir de modèles prédéfinis alimentés avec lesdites premières données.

6. Procédé selon la revendication 5, dans lequel ladite étape d'apprentissage (10-50) comprend une détermination d'une règle présentant le pourcentage de corrélation le plus élevé avec ladite anomalie parmi des règles résultant respectivement desdits modèles prédéfinis alimentés avec lesdites premières données.

7. Procédé selon la revendication 5 ou 6, dans lequel lesdits modèles prédéfinis sont choisis dans un groupe comprenant des forêts d'arbres décisionnels, des régressions linéaires et des réseaux de neurones.

8. Procédé selon l'une des revendications 1 à 7, dans lequel ladite étape de surveillance (60-80) comprend un regroupement dans chaque groupe de N dernières premières données générées, avec N ≥ 2, dans des fenêtres glissantes, et une analyse des N premières données du dernier groupe constitué en fonction de ladite règle déterminée afin de prédire l'occurrence de ladite anomalie dans le prochain groupe de premières données lorsque lesdites premières données dudit dernier groupe satisfont ladite règle.

9. Produit programme d'ordinateur comprenant un jeu d'instructions qui, lorsqu'il est exécuté par des moyens de traitement, est configuré pour mettre en oeuvre le procédé selon l'une des revendications précédentes pour surveiller un processus impliquant au moins un équipement électronique (EEj) en fonctionnement et générateur de premières données d'une métrique.

10. Dispositif (DS) de surveillance d'un processus impliquant au moins un équipement électronique (EEj) en fonctionnement, et générateur de premières données d'une métrique, le dispositif comprenant
i) des moyens d'apprentissage (MA) configurés pour analyser, de façon automatisée, des secondes données représentatives d'événements survenus pendant ledit processus afin de déterminer des anomalies d'un type choisi, les moyens d'apprentissage (MA) étant configurés pour déterminer de façon automatisée un indicateur représentatif de ladite métrique puis une corrélation entre lesdites anomalies déterminées et ledit indicateur puis au moins une règle définissant ladite corrélation, et
ii) des moyens de surveillance (MS1) configurés pour analyser, de façon automatisée, périodiquement et groupe après groupe, des premières données nouvellement générées en vérifiant si au moins une valeur dudit indicateur, déterminée à partir de ces dernières, satisfait à ladite règle déterminée, afin de prédire l'occurrence de ladite anomalie dans un futur groupe de premières données lorsque ladite au moins une valeur satisfait à ladite règle.

11. Système (S) comprenant au moins un équipement électronique (EEj) impliqué dans un processus générateur de premières données d'une métrique, le système comprenant en outre un dispositif de surveillance (DS) selon la revendication 10.

12. Système selon la revendication 11, **caractérisé en ce qu'**il constitue un calculateur à hautes performances.
